Europäisches Patentamt

European Patent Office

Office européen des brevets

(11) Veröffentlichungsnummer: **0 122 956**
**B1**

(12) **EUROPÄISCHE PATENTSCHRIFT**

(45) Veröffentlichungstag der Patentschrift: **09.11.88**

(21) Anmeldenummer: **83104607.3**

(22) Anmeldetag: **11.05.83**

(51) Int. Cl.⁴: **B 62 D 53/08,** B 62 D 47/02

(54) **Vorrichtung zur Fahrtstabilisierung von Sattelschlepp- und Gelenkfahrzeugen.**

(30) Priorität: **20.04.83 DE 3314282**

(43) Veröffentlichungstag der Anmeldung:
**31.10.84 Patentblatt 84/44**

(45) Bekanntmachung des Hinweises auf die
Patenterteilung:
**09.11.88 Patentblatt 88/45**

(84) Benannte Vertragsstaaten:
**BE CH DE FR GB IT LI LU NL SE**

(56) Entgegenhaltungen:
**BE-A- 875 962**
**DE-A-2 929 022**
**DE-C- 953 224**
**FR-A-2 248 695**
**GB-A-2 069 428**

(73) Patentinhaber: **Schultz, Rainer M.**
**Lagerlöfstrasse 19**
**D-2000 Hamburg 65 (DE)**

(72) Erfinder: **Schultz, Rainer M.**
**Lagerlöfstrasse 19**
**D-2000 Hamburg 65 (DE)**

(74) Vertreter: **Richter, Werdermann & Gerbaulet**
**Neuer Wall 10**
**D-2000 Hamburg 36 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

Die Erfindung betrifft eine Vorrichtung zur Verhinderung eines unbeabsichtigten Einknickens und zur Verbesserung der Seitenfahrstabilität bei kritischen Straßen- und Fahrverhältnissen, die im Drehpunktbereich eines aus einem vorderen Fahrzeugteil und einem mit diesem gelenkig verbundenen hinteren Fahrzeugteil, wobei eines der beiden Fahrzeugteile motorangetrieben ist, bestehenden Gelenkfahrzeuges angeordnet und für Sattelschleppfahrzeuge, Gelenkbusse oder Fahrzeuge mit nachlaufendem Fahrzeugteil geeignet ist, mit einer die beiden über ein Drehgelenk zueinander verschwenkbar gekoppelten Fahrzeugteile verbindenden Abstützeinrichtung, die aus hydraulischen Zylindereinheiten, die mit jeweils zwei Flüssigkeitskammern über Verbindungsleitungen so in Verbindung stehen, daß bei einer horizontalen Drehbewegung der Fahrzeugteile zueinander die jeweils sich entsprechend der Bewegung der Tauchkolben volumenmäßig verkleinernden Kammern und die sich volumenmäßig vergrößernden Kammern verbunden sind, und aus einer eine die Verbindungsleitungen verbindenden Verbindungsleitung oder eine die Flüssigkeitskammern verbindende Verbindungsleitung aufweisenden Durchflußbegrenzungseinrichtung besteht, wobei die Durchflußbegrenzungseinrichtung aus der Verbindungsleitung, in deren Durchflußbereich mindestens eine Drossel, mindestens ein regelbares Ventil, ein Hydraulikspeicher und eine Steuereinrichtung angeordnet sind, besteht.

Gelenkfahrzeuge, wie z.B. Sattelschleppfahrzeuge, bestehen aus einem Zugfahrzeug und hierauf aufgesatteltem nachlaufendem Anhänger. Dieser Nachläufer trägt das Ladegut und überträgt seine Masse über eine oder mehrere Achsen unmittelbar auf die Straße und mittelbar anteilig über die Achsen des Zugfahrzeuges bzw. des Vorderwagens.

Durch die gelenkige Verbindung ist das Fahrzeug in Bezug auf seine seitliche Fahrstabilität empfindlich. Das Verhältnis Radstand des Zugfahrzeuges zu dem Maß vom Aufliegerdrehpunkt bis Mitte Hinterachsaggregat beträgt bei Sattelschleppfahrzeugen allgemein etwa 1:2. Der Massenschwerpunkt liegt jedoch, bedingt durch die Bauform, relativ hoch und zwischen der Zugwagen-Hinterachse und dem Hinterachs-Aggregat des Nachläufers. Bei Beschleunigungs- und Verzögerungsvorgängen während der Fahrt kann sich hieraus ein instabiles Verhalten des Gesamtfahrzeuges ergeben. Der Kraftschluß zwischen den Rädern und der Straße ist dabei von erheblicher Bedeutung, insbesondere wenn große Haftungsunterschiede zwischen verschiedenen Rädern oder Achsen bestehen. Abhängig von der Fahrgeschwindigkeit, bei Bremsvorgängen oder Ausbrechen des Auflieger-Fahrzeuges besteht die Gefahr des horizontalen, nicht gewünschten Einknickens dieses Gelenkfahrzeuges.

Der Fahrverlauf auf einer horizontalen Ebene ergibt bei normalen Kraftschlußbedingungen eindeutige Beziehungen zwischen dem Lenkeinschlag der Vorderachse und dem Einknickwinkel des Sattelschleppers an seinem Aufliegerdrehpunkt. Hieraus ergibt sich auch der Kurvenverlauf des Fahrzeuges. Mit zunehmender Geschwindigkeit ist jedoch aus Sicherheitsgründen der zulässige Lenkwinkeleinschlag an der Vorderachse jeweils geringer zu halten. Entsprechend ergibt sich der zugehörige Winkel am Drehpunkt des Sattelaufliegers.

Das unbeabsichtigte Einknicken eines Gelenkfahrzeuges, wie z.B. eines Sattelschleppers, kann folgende Ursachen haben:
- unterschiedliche Haftwerte im Fahrverlauf und Massenkräfte,
- bei zu hoher Geschwindigkeit bewirken Massenkräfte über eine Hebelwirkung ein unbeabsichtigtes Einknicken,
- Schleuderwirkung bei mangelhafter Querradhäsion.

Zur Lösung dieser Probleme sind bereits verschiedene Konzepte vorgeschlagen worden.

So ist aus der GB—A—2 069 428 eine Vorrichtung bekannt, die aus einer die beiden über ein Drehgelenk zueinander verschwenkbar gekoppelten Fahrzeugteile verbindenden Abstützeinrichtung — die aus Hydraulikzylindereinheiten mit Tauchkolben und Flüssigkeitskammern besteht — wobei jeweils zwei Flüssigkeitskammern über Verbindungsleitungen so in Verbindung stehen, daß bei einer horizontalen Drehbewegung der Fahrzeugteile zueinander die jeweils sich entsprechend der Bewegung der Tauchkolben volumenmäßig verkleinernden Kammern und die sich volumenmäßig vergrössernden Kammern verbunden sind, und aus einer eine die Verbindungsleitungen verbindende Verbindungsleitung aufweisenden Durchfluß-Begrenzungseinrichtung besteht.

Mit der BE—A—875 962 ist eine zwei über ein Drehgelenk zueinander verschwenkbar gekoppelte Fahrzeugteile verbindende Abstützeinrichtung bekannt geworden, die aus mindestens einer an einem der beiden Fahrzeugteile endseitig angelenkten und mit ihrem gegenüberliegenden Ende jeweils rechts von einer Gelenkmittelachse am jeweils anderen Fahrzeugteil in einem Abstand zur Gelenkmittelachse angelenkten, zwei durch einen an einer Kolbenstange befestigten Tauchkolben getrennte Flüssigkeitskammern aufweisende Hydraulikzylindereinheit besteht, wobei jeweils zwei Flüssigkeitskammern über Verbindungsleitungen so in Verbindung stehen, daß bei einer horizontalen Drehbewegung der Fahrzeugteile zueinander die jeweils sich entsprechend der Bewegung der Tauchkolben volumenmäßig verkleinernden Kammern und die sich volumenmäßig vergrößernden Kammern verbunden sind. Eine Durchflußbegrenzungseinrichtung ist hierbei nicht vorgesehen.

Bei der bekannten Durchflußbegrenzungseinrichtung ist eine schrittweise oder kontinuierliche Änderung der Durchflußbegrenzung vorgesehen, wobei für die Regelung dieser Änderung Stellgrößen, wie Lenkwinkel, Knickwinkel und Geschwindigkeit herangezogen werden. Eine systeminterne Regelung ist hierbei nicht vorgesehen.

Die Erfindung löst die Aufgabe, eine Vorrichtung der eingangs genannten Art zu schaffen, mit der eine Übersteuerung und ein unkontrolliertes Verschwenken des jeweils hinteren Fahrzeugteiles eines aus zwei über ein Drehgelenk miteinander verbundenen Fahrzeugteilen bestehenden Gelenkfahrzeuge verhindert und mit der die Einknicksicherheit und die Seitenstabilität derartiger Gelenkfahrzeuge erhöht wird, wobei deren Sperrwirkung unabhängig von der Reaktion des Fahrers und der jeweiligen Fahrbedingungen eintritt und die die Streckung des Gelenkfahrzeuges nach eingetretener Sperrung nicht verhindert, die keine negative Rückwirkung auf das Fahrverhalten hat, und bei der der Impuls für das Einsetzen einer Gelenkblockierung grundsätzlich nur von einer Meß- und Regelgröße abhängig ist.

Zur Lösung dieser Aufgabe wird daher eine Vorrichtung der eingangs genannten Art vorgeschlagen, die erfindungsgemäß dadurch gekennzeichnet ist, daß

a) die Abstützeinrichtung aus mindestens einer an einem der beiden Fahrzeugteile endseitig angelenkten und mit ihrem gegenüberliegenden Ende jeweils rechts bzw. links von einer Gelenkmittelachse am jeweils anderen Fahrzeugteil in einem Abstand zur Gelenkmittelachse angelenkten, zwei durch einen an einer Kolbenstange befestigten Tauchkolben getrennte Flüssigkeitskammern aufweisende Hydraulikzylindereinheit besteht,

b) im Durchflußbereich der Verbindungsleitung Mittel vorgesehen sind, die den Druck in der Verbindungsleitung messen und mindestens ein Drucksignal erzeugen,

c) die Drossel und das regelbare Ventil als Durchflußregeleinrichtung ausgebildet sind und

d) die Steuereinrichtung als elektronisch gesteuertes Programmschaltwerk ausgebildet ist und folgende Komponenten aufweist:

- einen Sollwertspeicher, in dem ein konstanter Wert eingespeichert ist, der einen Grenzwert für den Druckanstieg in der Verbindungsleitung darstellt,

- eine Recheneinheit, die aus dem Drucksignal den Druckanstieg im Verhältnis zur Zeit $\Delta t$ bestimmt,

- eine Vergleichereinrichtung, in der dieser Druckanstieg mit dem konstanten Wert verglichen wird, und

- einen Ventilbetätigungsschalter, durch den das regelbare Ventil in Tätigkeit gesetzt wird, wenn der Druckanstieg den konstanten Wert überschreitet.

Mit einer derartigen Vorrichtung ist die Möglichkeit geschaffen, den Impuls für das Einsetzen der Gelenkblockierung allein über einen oder zwei im System angeordnete Druckmeßschalter zu geben, wobei die Vorrichtung dann sowohl als Meß- als auch als Regeleinrichtung zur Verhinderung und Dämpfung eines unbeabsichtigten Einknickens und zur Verbesserung der Seitenfahrstabilität eines Gelenkfahrzeuges dient. Es kann daher ein unbeabsichtigtes Einknicken nicht mehr stattfinden und in kritischen Bereichen des Fahrgeschehens wird einerseits ein solcher Fahrzeugstand sofort meßtechnisch erfaßt und andererseits gleichzeitig die notwendige Einknicksicherheit gewährleistet.

Dabei besteht die Durchfluß-Begrenzungseinrichtung aus einer Verbindungsleitung, in deren Durchflußbereich mindestens eine Drossel, mindestens ein regelbares Ventil, mindestens zwei in Strömungsrichtung jeweils vor bzw. hinter dem regelbaren Ventil mit der Verbindungsleitung verbundene Druckmeßeinrichtungen, ein Hydraulikspeicher und eine Steuerungseinrichtung angeordnet sind, wobei die Drossel und das regelbare Ventil als Durchflußregeleinrichtung ausgebildet sind, die von der Steuereinrichtung gesteuert wird. Mit einer solchen Durchflußregeleinrichtung ist es möglich, unter Verwendung einer nur geringen Anzahl von Bauteilen eine vollständige Meß- und Regeleinrichtung zur Gelenkblockierung bzw. Schwingungsdämpfung auszubilden.

Mit der Ausbildung der Durchfluß-Begrenzungseinrichtung wird unter Verwendung einfachster und sehr betriebssicherer Bauteile eine geeignete Meß- und Regelvorrichtung innerhalb der Vorrichtung zur Verhinderung eines unbeabsichtigten Einknickens und zur Verbesserung der Seitenfahrstabilität geschaffen.

Vorteilhafte Weiterbildungen und Ausführungsformen der Erfindung sind in den Unteransprüchen beschrieben.

Im folgenden wird der Gegenstand der Erfindung in den Zeichnungen erläutert. Es zeigt

Fig. 1 in einer schematischen Systemdarstellung von oben eine Knickwinkelregelungs- und Begrenzungsvorrichtung,

Fig. 2 in einer schematischen Systemdarstellung von oben die Vorrichtung gemäß Fig. 1 in einer gelenkblockierenden Betriebsstellung,

Fig. 3 in einer schematischen Systemdarstellung von oben eine Knickwinkelregelungs- und Begrenzungsvorrichtung in einer weiteren Ausführungsform in einer Freigabe-Betriebsstellung,

Fig. 4 in einer schematischen Systemdarstellung von oben die Vorrichtung gemäß Fig. 3 in einer Regel-Betriebsstellung,

Fig. 5 in einer schematischen Systemdarstellung von oben die Vorrichtung gemäß Fig. 3 in einer Blockier-Betriebsstellung,

Fig. 6 in einer schematischen Systemdarstellung von oben eine Knickwinkelregelungs- und Begrenzungsvorrichtung in einer Freigabe-Betriebstellung,

Fig. 7 in einer schematischen Systemdarstellung von oben die Vorrichtung gemäß Fig. 6 in einer Regel-Betriebsstellung,

Fig. 8 in einer schematischen Systemdarstellung von oben die Vorrichtung gemäß Fig. 6 in einer Blockier-Betriebsstellung,

Fig. 9 in einer schematischen Systemdarstellung von oben eine Knickwinkelregelungs- und Begrenzungsvorrichtung in einer weiteren Ausführungsform,

Fig. 10 in einer schematischen Systemdarstellung von oben ein Drehgelenk,

Fig. 11 in senkrechter Schnittdarstellung das
Drehgelenk gemäß Linie XI-XI in Fig, 10,

Fig. 12 in einer schematsichen Systemdarstellung von oben die Knickwinkelregelungs- und
Begrenzungsvorrichtung in einer weiteren Ausführungsform, und

Fig. 13 in einer schematischen Systemdarstellung von oben die Vorrichtung gemäß Fig. 12 in
einer Blockier-Betriebsstellung,

Fig. 14 und 15 in schematsicher Darstellung
einen Signalflußplan.

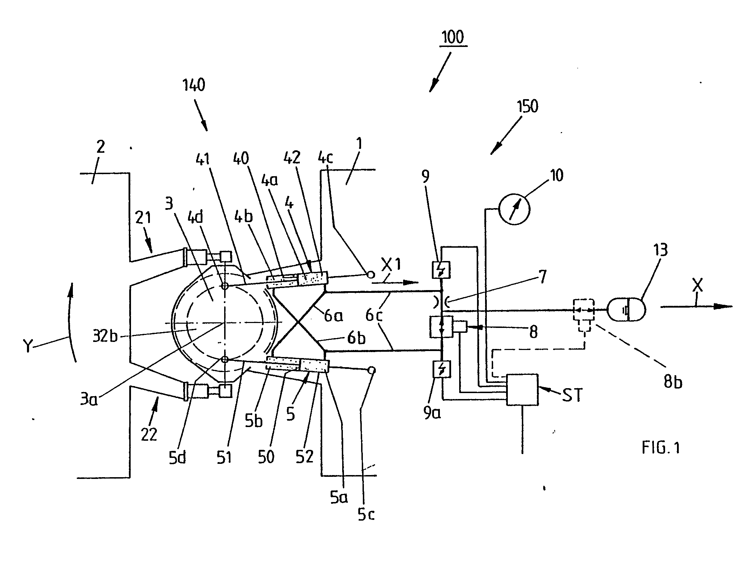

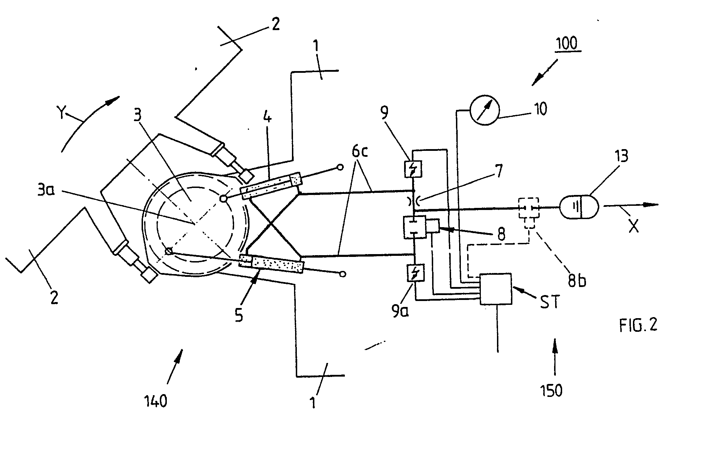

In den Fig. 1 und 2 ist die Knickwinkelregelungsund Begrenzungsvorrichtung mit 100 bezeichnet,
die aus der Abstützeinrichtung 140 und der
Durchfluß-Begrenzungseinrichtung 150 besteht.
Die Vorrichtung 100 ist rein schematisch an einem
zwei Fahrzeugteile 1, 2 verbindenden Drehgelenk
3 dargestellt, wobei hier auch jedes andere, die
gleiche Wirkungsweise und Kinematik erzielende
Gelenk angewendet werden kann. Das angedeutete Fahrzeug selbst besteht aus einem vorderen
Fahrzeugteil 1 und einem hinteren, beispielsweise
motorangetriebenen, Fahrzeugteil 2, wobei beide
Fahrzeugteile 1, 2 durch das Drehgelenk 3 so
verbunden sind, daß die für eine Verbindung
solcher Gelenkfahrzeuge erforderliche Bewegungsfreiheit in drei Ebenen gewährleistet ist,
nämlich ein Einschlag der Fahrzeugteile zueinander um die vertikale Hochachse, ein Einknicken
der Fahrzeugteile in Fahrzeuglängsrichtung im
Gelenkbereich und eine elastische Verdrehbarkeit
im Gelenk.

Die Abstützeinrichtung 140 ist dementsprechend im Bereich des Drehgelenkes der beiden
Fahrzeugteile 1, 2 angeordnet und besteht aus
zwei Hydraulikzylindereinheiten 4, 5. Die Hydraulikzylindereinheiten 4, 5, die zwei durch einen an
einer Kolbenstange 41, 51 befestigten Tauchkolben 40, 50 getrennte Flüssigkeitskammern 4a, 4b,
5a, 5b aufweisen, sind mit ihrem vorderen Ende
4d, 5d im Bereich des Drehgelenkes 3 in einem
Abstand zur Gelenkmittelachse 3a auf der Jochplatte 32b angeordnet, die über Träger 21, 22 mit
dem Fahrzeugteil 2 verbunden ist. Die gegenüberliegenden Enden 4c, 5c der Hydraulikzylindereinheiten 4, 5 sind am anderen Fahrzeugteil 1 entsprechend angelenkt, wobei jede gelenkige Aufhängung 4c, 4d, 5c, 5d so ausgestaltet ist, daß die
Hydraulikzylindereinheiten der Bewegung der
Fahrzeugteile zueinander und der Gelenkbewegung bei einer gleichzeitigen Bewegung der an
den Kolbenstangen 41, 51 befestigten Tauchkolben 40, 50 innerhalb der Gehäuse 42, 52 der
Hydraulikzylindereinheiten 4, 5 keine unbeabsichtigten Widerstände entgegensetzen.

Im Gehäuse 42, 52 jeder Zylindereinheit 4, 5
werden durch den Tauchkolben 40, 50 getrennte
Flüssigkeitskammern 4a, 4b, 5a, 5b ausgebildet,
wobei jeweils zwei Flüssigkeitskammern 4a, 4b,
5a, 5b über Verbindungsleitungen 6a, 6b so in
Verbindung stehen, daß bei einer horizontalen Drehbewegung der Fahrzeugteile 1, 2 zueinander
die jeweils sich entsprechend der Bewegung der
Tauchkolben 40, 50 volumenmäßig verkleinernden Kammern 4a, 5b und die sich volumenmäßig
vergrößernden Kammern 4b, 5a verbunden sind.
Die Flüssigkeitskammern 4a, 4b, 5a, 5b sind
ebenso wie die Verbindungsleitungen 6a, 6b mit
einer geeigneten inkompressiblen Hydraulikflüssigkeit, wie beispielsweise Hydrauliköl, vollständig gefüllt, so daß durch eine Bewegung der
Tauchkolben ein Flüssigkeitsaustausch zwischen
den Verbindungsleitungen 6a und 6b erfolgen
muß. Bei einem Verschwenken des Fahrzeugteiles 2 in dem mit Y gekennzeichneten Drehsinn um
die Gelenkmittelachse 3a muß entsprechend der
Bewegung der Tauchkolben 40, 50 und der sich
volumenmäßig verkleinernden Kammern 4a, 5b
Flüssigkeit aus der Verbindungsleitung 6a in die
Verbindungsleitung 6b geleitet werden. Hierzu ist
die Verbindungsleitung 6c zwischen den Verbindungsleitungen 6a, 6b vorgesehen, wobei die
Verbindungsleitung 6c jeweils an jeder beliebigen
Stelle der Verbindungsleitung 6a bzw. der Verbindungsleitung 6b angeschlossen sein kann.

Innerhalb der Verbindungsleitung 6c ist die
Durchflußbegrenzungseinrichtung 150 angeordnet, die aus einer Druckmeßeinrichtung 9,
einer Drossel 7, einem regelbaren Ventil 8, gegebenenfalls einem Hydraulikspeicher 13, einer weiteren Druckmeßeinrichtung 9a und einer Steuerungseinrichtung ST besteht, wobei die Steuerungseinrichtung mit sämtlichen Elementen (7, 8,
9, 9a) der Durchfluß-Begrenzungseinrichtung 150
über entsprechende elektrische Anschlußleitungen verbunden ist. Die Steuerungseinrichtung ST
ist darüber hinaus noch mit einer entsprechenden
Tachometereinrichtung 10 verbunden.

Die Arbeitsweise der Durchfluß-Begrenzungseinrichtung ist anhand von Fig. 1 und 2 dargestellt. Bei der oben beschriebenen Drehbewegung
des Fahrzeugteiles 2 gegenüber dem Fahrzeugteil
1 um die Gelenkmittelachse 3a des Gelenkes 3 in
der mit Y gekennzeichneten Drehrichtung entsteht ein Flüssigkeitsstrom in der Verbindungsleitung 6c in der mit X1 gekennzeichneten Pfeilrichtung. Dieser Flüssigkeitsstrom durchströmt nacheinander die Drossel 7 und das regelbare Ventil 8,
wobei er vor Durchfluß der Drossel 7 die Druckmeßeinrichtung 9 bzw. nach Austritt aus dem
Ventil 8 die Druckmeßeinrichtung 9a beaufschlagt. In der in Fig. 1 symbolisch dargestellten
Betriebsstellung des regelbaren Ventils 8 durchströmt der Flüssigkeitsstrom das Ventil 8 ungehindert, so daß ein freier Flüssigkeitsaustausch
zwischen den Flüssigkeitskammern 4a, 5b und
den Flüssigkeitskammern 4b, 5a stattfinden kann,
wobei der Volumendifferenzstrom vom Hydraulikspeicher 13 aufgenommen wird.

Der die Leitung 6c durchströmende Flüssigkeitsstrom der Hydraulikflüssigkeit steht unter
einem gewissen Druck, da der freie Durchfluß
durch die Drossel 7 behindert wird. Da der Ausgleich zwischen den Flüssigkeitskammern 4a, 4b,
5a, 5b über die Verbindungsleitungen 6a, 6b, 6c
proportional zur Drehbewegung des Fahrzeugteils 2 gegenüber dem Fahrzeugteil 1 ist, ist auch die Geschwindigkeit des Flüssigkeitsstromes in der Verbindungsleitung 6c direkt proportional zur Drehgeschwindigkeit des Fahrzeugteiles 2 um die Gelenkmittelachse 3a. Da auch der Druck in der Verbindungsleitung 6c in Relation zur Durchflußgeschwindigkeit des Flüssigkeitsstromes durch die Verbindungsleitung 6c steht, ergibt sich die Möglichkeit, den Druck in der Verbindungsleitung 6c direkt als Meßsignal für die Drehgeschwindigkeit um die Gelenkmittelachse 3a zu verwenden. Dieser Druck wird jeweils von den Druckmeßeinrichtungen 9, 9a aufgenommen, der ein entsprechendes Meßsignal an die Steuerungseinrichtung ST abgibt.

Wenn nun das Fahrzeugteil 2 gegenüber dem Fahrzeugteil 1 in eine sehr schnelle Drehbewegung gelangt, steigt der Druck in der Verbindungsleitung 6c vor der Drossel 7 stark an. Dieser Druckanstieg tritt beispielsweise ein, wenn das motorangetriebene Fahrzeugteil 2 bei Ausfall der Queradhäsion der (in der Zeichnung nicht dargestellten) Mittelachse das Fahrzeug 1, 2 über seinen Drehpunkt 3a ungewollt nach außen schiebt oder wenn heftige Schleuderbewegungen des Fahrzeugteils 2 auftreten, wobei dann das Hydraulikmedium unter erhöhtem Druck durch die Drossel 7 gepreßt wird.

Überschreitet der Druck, der durch die Druckmeßeinrichtungen 9, 9a gemessen wird, einen in der Steuereinrichtung ST vorgegebenen Wert, wird das regelbare Ventil 8 in Tätigkeit gesetzt, d.h. es verringert seinen Querschnitt. Hierdurch wird die Drehbewegung der Fahrzeugteile zueinander gebremst bzw. ganz gesperrt, wenn die Ventile 8, 8b ganz schließen. Bei einem Schließen des Ventiles 8 kann das Hydraulikmedium beispielsweise bei einer Drehbewegung in Y-Richtung nicht mehr aus den Flüssigkeitskammern 4a, 5b in die Flüssigkeitskammern 4b, 5a strömen und daher ist dann das Gelenk 3 des Fahrzeuges 1, 2 in Bezug auf seine Drehbewegung blockiert. Dieses Blockieren des Gelenkes wird über die Steuereinrichtung ST solange aufrechterhalten, bis der über die Druckmeßeinrichtung 9 bzw. 9a gemessene Druck absinkt, da ein solches Absinken des Druckes anzeigt, daß beispielsweise die Schleuderbewegungen des Fahrzeugteiles 2 aufgefangen sind oder daß die Queradhäsion des Fahrzeuges wieder hergestellt ist. Die in Fig. 2 dargestellte Blockierstellung des Ventiles 8 wird dann wieder aufgehoben und durch die in die mit X gekennzeichnete Richtung gerichtete Fahrtbewegung des Gelenkfahrzeuges wird das Gelenkfahrzeug in Bezug auf seine Fahrzeugteile 1, 2 wieder in eine gerade Stellung gebracht.

Der von der Steuereinrichtung ST vorgegebene und durch die Druckemßeinrichtungen 9, 9a gemessene Grenzwert des Druckes wird von der Steuereinrichtung ST in Abhängigkeit von der Fahrgeschwindigkeit vorgegeben, die der Steuereinrichtung ST von einer Tachometereinrichtung 10 zugeleitet wird. Aus der Geschwindigkeitsgabe, die von der Tachometereinrichtung 10 übermittelt wird, errechnet die Steuereinrichtung ST über eine geeignete Programmschaltung die jeweiligen Druckwerte, bei denen das regelbare Ventil 8 seinen Querschnitt verkleinert bzw. seinen Querschnitt ganz verschließt. Ebenfalls können in der Steuereinrichtung ST konstante, fahrzeugspezifische Druckgrenzwerte fest eingespeichert werden.

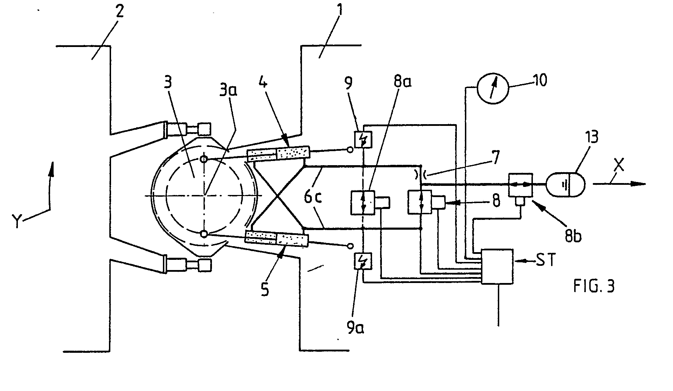

In Fig. 3 ist eine weitere Ausführungsform der Vorrichtung dargestellt, bei der innerhalb der Verbindungsleitung 6c parallel zum Ventil 8 ein weiteres Ventil 8a angeordnet ist. Dieses Ventil 8a ermöglicht ein unbehindertes Rangieren eines derartigen Gelenkfahrzeuges, da gerade beim Rangieren eine schnelle Drehbewegung um die Gelenkmittelachse 3a der Fahrzeugteile 1, 2 zueinander einsetzt. Die Arbeitsweise des Ventiles 8 und des Ventiles 8a ist anhand der Fig. 3 bis 5 dargestellt. Bei langsamer Fahrt des Gelenkfahrzeuges ist das Ventil 8 geöffnet. Das von der Steuereinrichtung ST in Abhängigkeit von der über die Tachometereinrichtung 10 ermittelten Fahrgeschwindigkeit gesteuerte Ventil 8a öffnet bei abfallender Fahrzeuggeschwindigkeit und läßt somit die Drossel 7 unwirksam werden. Auf diese Weise wird der gesamte Querschnitt des Ventiles 8a und damit der Verbindungsleitung 6c freigegeben, so daß das Rangieren des Fahrzeuges und damit eine Drehbewegung der Fahrzeugteile 1, 2 zueinander ungehindert ermöglicht wird.

Bei Geradeausfahrt und steigender Geschwindigkeit wird dann über die Steuereinrichtung ST das Ventil 8a geschlossen. Da das Ventil 8 weiterhin geöffnet ist, wird nunmehr die Drossel 7 wirksam, wobei in der Verbindungsleitung 6c auch mehrere Drosseln 7 angeordnet sein können, wodurch der Flüssigkeitsaustausch zwischen den entsprechenden Flüssigkeitskammern 4a, 4b, 5a, 5b der Hydraulikzylindereinheiten 4, 5 gedämpft, und darüber hinaus noch durch eine Dämpfung dieses Flüssigkeitsaustausches eventuell auftretende Pendelbewegungen der Fahrzeugteile zueinander gedämpft werden.

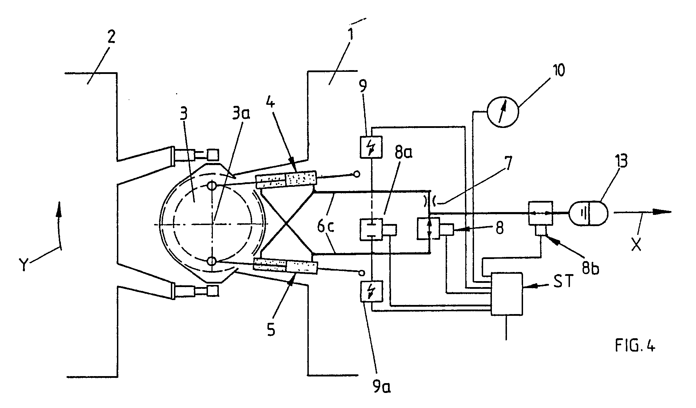

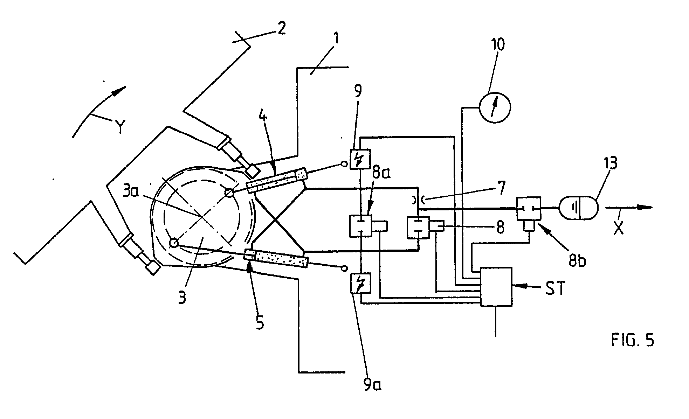

In Fig. 3 sind beide Ventile 8, 8a geöffnet, in Fig. 4 das Ventil 8 geöffnet, das Ventil 8a geschlossen und in Fig. 5 beide Ventile 8, 8a geschlossen dargestellt. Bei der in Fig. 5 dargestellten Betriebsstellung der Durchfluß-Begrenzungseinrichtung 150 befindet sich die Vorrichtung 100 in ihrer das Gelenk 3 blockierenden Stellung, da ein Flüssigkeitsaustausch zwischen den Flüssigkeitskammern 4a, 4b, 5a, 5b über die Verbindungsleitungen 6a, 6b, 6c in dieser Betriebsstellung nicht stattfinden kann.

Der unabhängig von der Geschwindigkeit des Flüssigkeitsaustausches zwischen den einzelnen Flüssigkeitskammern durch die unterschiedlichen Volumina der einzelnen Flüssigkeitskammern hervorgerufene Druckanstieg wird von einem an die Verbindungsleitung 6c angeschlossenen Hydraulikspeicher 13 aufgenommen. Dies ist insbesondere deshalb notwendig, da die jeweiligen Flüssigkeitskammern 4a, 4b, 5a, 5b jeweils einer Hydraulikzylindereinheit 4, 5 unterschiedliche Volumensänderung bei einer Bewegung der Tauchkolben 40, 50 aufweisen, da in jeweils einer Flüssigkeitskammer auch die Kolbenstange 41, 51 angeordnet ist.

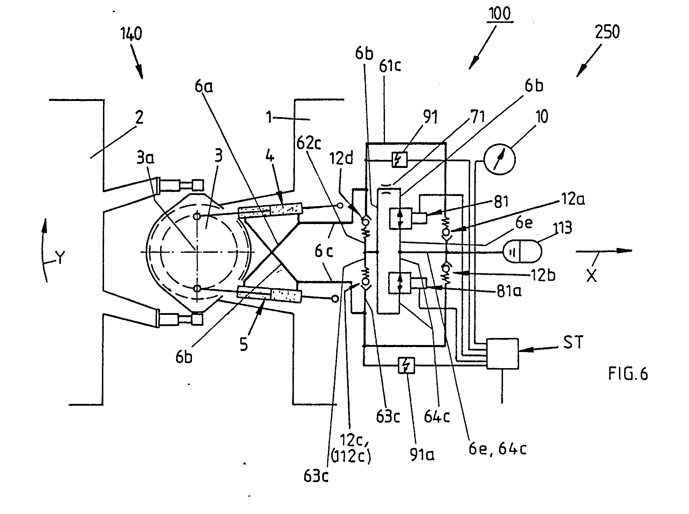

Bei der in den Fig. 6 bis 8 gezeigten Ausführungsform der Knickwinkelregelungs- und Begrenzungsvorrichtung besteht die Vorrichtung aus der Abstützeinrichtung 140 und der Durchfluß-Begrenzungseinrichtung 250. Die Abstützeinrichtung 140 ist wie voranstehend beschrieben aufgebaut.

Die Durchfluß-Begrenzungseinrichtung 250, deren Wirkungsweise in Bezug auf die Abstützeinrichtung 140 der Wirkungsweise der Durchfluß-Begrenzungseinrichtung 150 gleicht, besteht aus Rückschlagventilen 12a, 12b, 12c, 12d, zwei Druckmeßschaltern 91, 91a, einer Drossel 71, einem regelbaren Ventil 81 und einem Hydraulikspeicher 113, die in geeigneter Weise in den Verbindungsleitungen 6c, 6e, 61c, 62c, 63c folgendermaßen angeordnet sind. Die Verbindungsleitung 6c weist einen Abschnitt 61c auf, in dem zwei entgegengesetzt sperrende Rückschlagventile 12a, 12b und zwei Druckmeßschalter 91, 91a angeordnet sind, zwischen denen eine Zuführungsleitung 6e einmündet, die über Zuführungsleitungen 62c, 63c ebenfalls mit der Verbindungsleitung 6c vor bzw. hinter deren Abschnitt 61c verbunden ist. Die Zuführungsleitung 62c, die in ihrem Strömungsverlauf ein Rückschlagventil 12d und die Zuführungsleitung 63c, die in ihrem Strömungsverlauf ein Rückschlagventil 12c aufweisen, vereinigen sich zur Zuführungsleitung 6e, in deren Verlauf eine Drossel 71, ein regelbares Ventil 81 und ein Hydraulikspeicher 113 angeordnet sind. Um Rangierfahrten eines Gelenkfahrzeuges und langsame Fahrbewegungen bei starkem Lenkeinschlag zu erleichtern, ist die Zuführungsleitung 63c über eine Verbindungsleitung 64c mit dem Abschnitt 61c der Verbindungsleitung 6c im Einmündungsbereich der Zuführungsleitung 6e verbunden, wobei im Strömungsverlauf der Verbindungsleitung 64c ein entsprechend angeordnetes Rückschlagventil 112c und ein weiteres regelbares Ventil 81a angeordnet sind.

Die Arbeitsweise der Durchfluß-Begrenzungseinrichtung 250 sei zunächst anhand von Fig. 6 erläutert. Bei einer Drehbewegung des Fahrzeugteiles 2 gegenüber dem Fahrzeugteil 1 um die Gelenkmittelachse 3a in der mit Y gekennzeichneten Pfeilrichtung findet über die Verbindungsleitungen 6a, 6b, 6c ein entsprechender, oben beschriebener, Austausch von Hydraulikflüssigkeit zwischen den sich jeweils verkleinernden bzw. vergrößernden Flüssigkeitskammern 4a, 4b, 5a, 5b statt, wobei die sich austauschende Hydraulikflüssigkeit über die Verbindungsleitung 6c fließt. Bei der angegebenen Drehbewegung des Fahrzeugteils 2 fließt der Hydraulikstrom aufgrund der Sperr- bzw. Freigabewirkungen der verschiedenen Rückschlagventile 12a, 12b, 12c, 12d aus der Verbindungsleitung 6a über die Verbindungsleitung 6c und die Zuführungsleitung 62c in die Zuführungsleitung 6e, in deren Strömungsverlauf die Drossel 71, das regelbare Ventil

81 und der Hydraulikspeicher 113 angeordnet sind. Nach Durchfließen der Zuführungsleitung 6e wird die Hydraulikflüssigkeit über einen weiteren Teil der Leitung 61c und der Verbindungsleitung 6c in die Verbindungsleitung 6b und darüber in die Hydraulikzylindereinheiten 4, 5 zurückgeleitet. Bei der in Fig. 6 gezeigten Freigabe-Betriebsstellung des regelbaren Ventiles 81a kann die Hydraulikflüssigkeit parallel zur Zuführungsleitung 6e durch die Verbindungsleitung 64c, in deren Strömungsverlauf das regelbare Ventil 81a angeordnet ist, direkt in die Leitung 61c in den entsprechenden Abschnitt der Leitung 61c eingeleitet werden, so daß die Hydraulikflüssigkeit die Druckmeßeinrichtung 91, die Drossel 71 und das regelbare Ventil 81 nicht beaufschlagt.

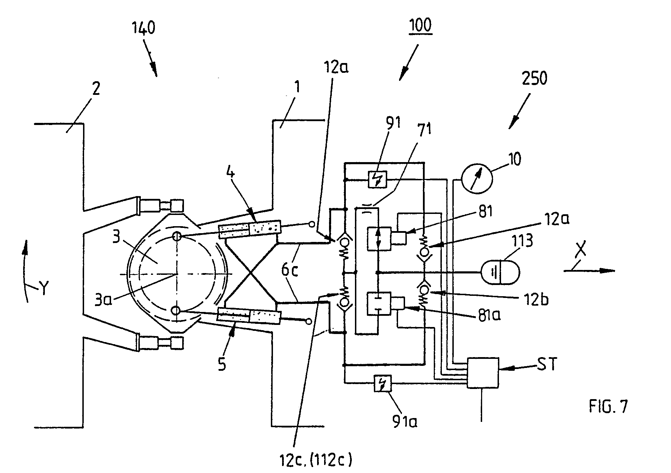

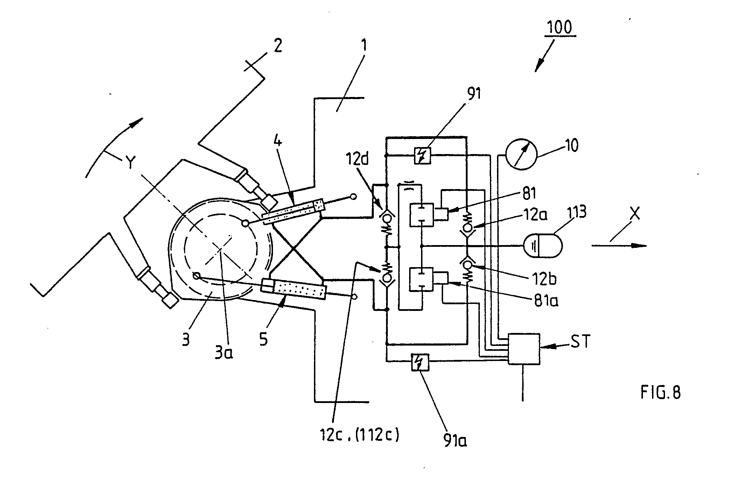

Bei der in Fig. 7 dargestellten Sperr-Betriebsstellung den Ventiles 81a wird die Hydraulikflüssigkeit bei einer entsprechenden Drehbewegung des Fahrzeugteils 2 zwangsweise durch die Zuführungsleitung 6e hindurchgeführt. In dieser Betriebsstellung wird dann, wenn vor der Drossel 71 der Druck in der Hydraulikflüssigkeit den von der Steuerungsvorrichtung ST vorgegebenen Wert, der durch die Druckmeßeinrichtung 91 aufgenommen wird, überschreitet, das regelbare Ventil 81 teilweise oder ganz geschlossen, so daß Pentel- oder Schleuderbewegungen des Fahrzeugteiles 2 gedämpft werden oder bei Blockierung des Gelenkes 3 vollkommen verhindert werden. Die Blockierstellung, die durch völliges Verschließen der Ventile 81, 81a erreicht wird, ist in Fig. 8 dargestellt. Auch bei dieser Anordnung ist ein Hydraulikspeicher 113 vorsehbar, der zur Aufnahme des unabhängig von der Geschwindigkeit der Drehbewegung der Fahrzeugteile 1, 2 zueinander entstehenden Flüssigkeitsdifferenzstromes geeignet ist.

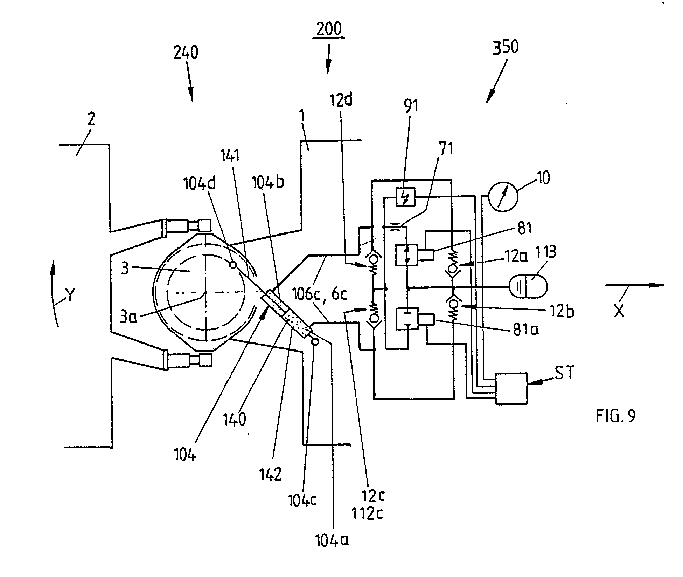

In Fig. 9 ist eine weitere Ausführungsform der Knickwinkelregelungs- und Begrenzungsvorrichtung dargestellt, wobei die Vorrichtung 200 aus der Abstützeinrichtung 240 und der Durchfluß-Begrenzungseinrichtung 350, die nur eine Druckmeßeinrichtung 91 aufweist, besteht.

Die Abstützeinrichtung 240 besteht aus einer mit ihrem einen Ende 104c am Fahrzeugteil 1 und mit ihrem gegenüberliegenden Ende 104 in einem Abstand von der Gelenkmittelachse 3a am anderen Fahrzeugteil entsprechend gelenkig befestigten Hydraulikzylindereinheit 104, in deren Gehäuse 142 zwei durch einen an einer Kolbenstange 141 befestigten Tauchkolben 140 betrennte Flüssigkeitskammern 104a, 104b ausgebildet sind. Die Flüssigkeitskammern 104a, 104b werden durch eine Verbindungsleitung 106c verbunden, in deren Verlauf die Durchfluß-Begrenzungseinrichtung 350 angeordnet ist, deren Wirkungsweise der voranstehend bereits beschriebenen Durchfluß-Begrenzungseinrichtung 250 gleicht.

Die Ausbildung der Abstützeinrichtung 240 ermöglicht eine Anordnung einer Knickwinkelregelungs- und Begrenzungsvorrichtung auch bei Gelenkfahrzeugen, bei denen im Bereich des die beiden Fahrzeugteile verbindenden Gelenkes nur ein geringer Raum zur Anordnung einer derartigen Vorrichtung zur Verfügung steht. Durch eine geeignete, konstruktive und festigkeitsmäßige Ausbildung der Abstützeinrichtung 240 ist es allerdings auch möglich, die Vorrichtung 200 auch bei schweren Gelenkfahrzeugen, wie Sattelschleppfahrzeugen, Gelenkbussen oder Fahrzeugen mit nachlaufendem, angetriebenem Fahrzeugteil anzuordnen.

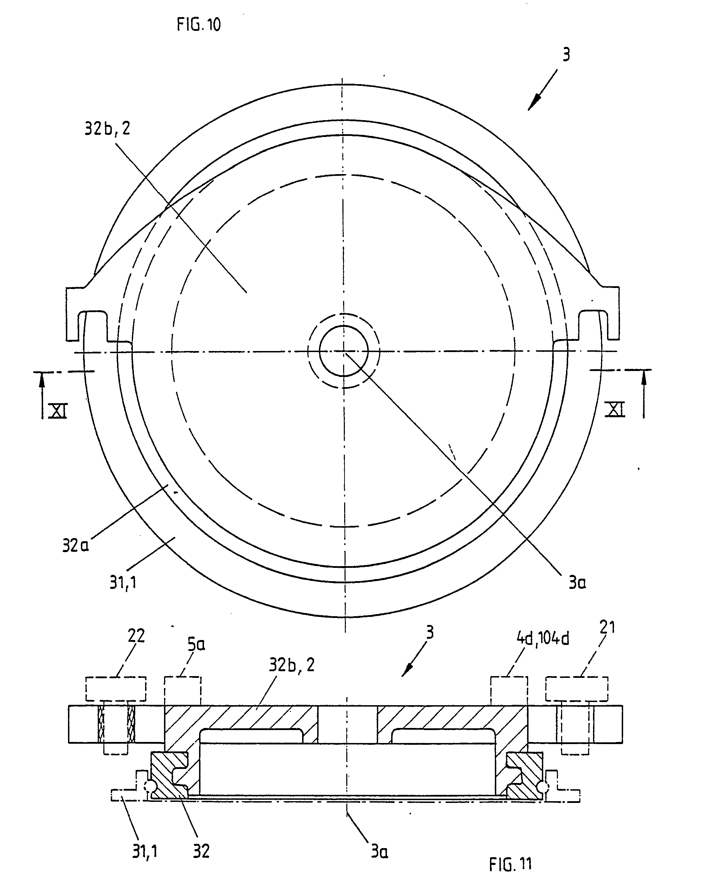

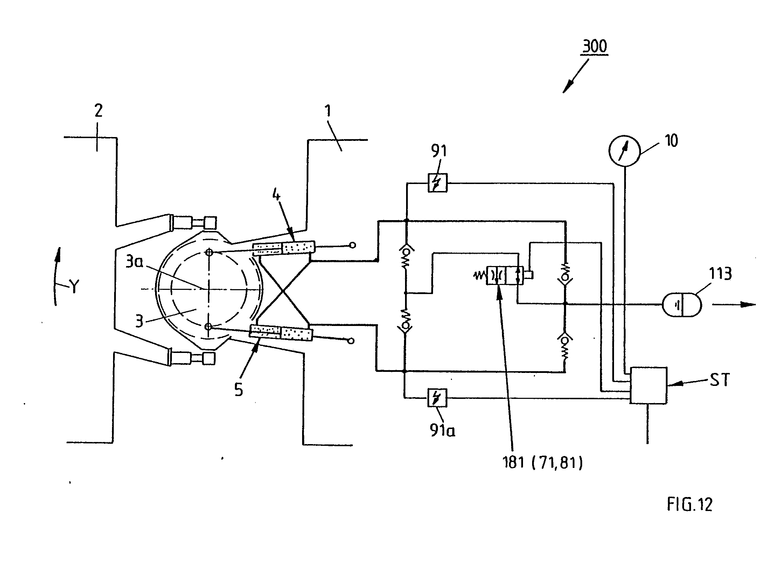

In Fig. 10 ist ein speziell für die Anwendung einer Knickwinkelregelungs- und Begrenzungsvorrichtung geeignetes Drehgelenk dargestellt, wobei auch jedes andere, die Anforderungen an Drehgelenke bei Gelenkfahrzeugen erfüllende Gelenk im Zusammenhang mit der Knickwinkelregelungs- und Begrenzungsvorrichtung 100, 200, 300 angewendet werden kann, wenn eine geeignete Möglichkeit zur Anlenkung der Endpunkte 4d, 5d, 104d, 105d der Hydraulikeinrichtungen 4, 5, 104 besteht. Das Drehgelenk 3 besteht aus einem am Fahrzeugteil 1 fest angeordneten Grundring 31, in dem ein Innenkranz 32a, der die Jochplatte 32b trägt und mit dieser fest verbunden ist, frei drehbar gelagert ist, wobei die Jochplatte 32b über entsprechende Träger 21, 22 mit dem Fahrzeugteil 2 lösbar verbunden ist. Auf der Jochplatte 32b sind dann die Endpunkte 4d, 5d, 104d der Hydraulikzylindereinheiten 4, 5, 104 angeordnet, wie es in Fig. 11 rein schematisch angedeutet ist. Die Träger 21, 22, die über entsprechende elastische Lagerungen in die Jochplatte 32b eingreifen, übertragen über die Jochplatte 32b die Drehbewegung des Fahrzeugteils 2 auf die Hydraulikzylindereinheiten 4, 5, 104, wodurch dann bei Sperrwirkung der Knickwinkelregelungs- und Begrenzungsvorrichtung eine Blockierung dieser Drehbewegung erreichbar ist. Wenn sich die Knickwinkelregelungs- und Begrenzungsvorrichtung allerdings in ihrer Freigabe-Betriebsstellung befindet, ist eine freie Drehbewegung der Fahrzeugteile zueinander möglich, da der Innenkranz 32a über eine Kugeldrehverbindung frei drehbar im Grundring 31 angeordnet ist.

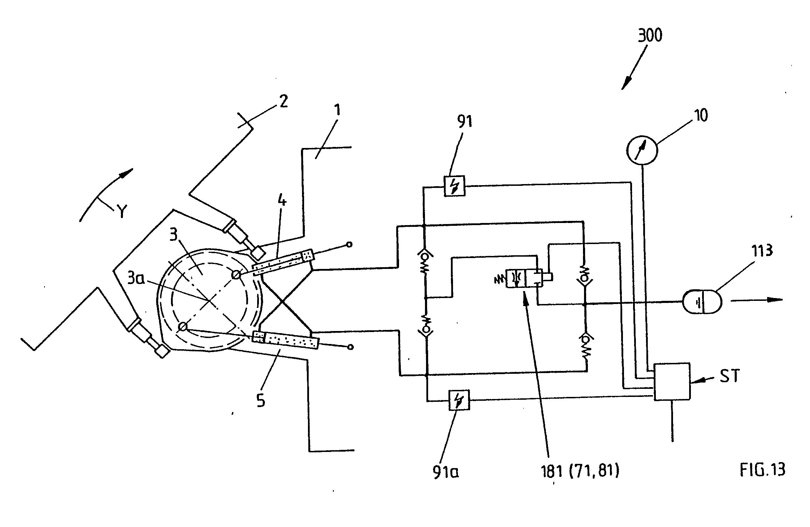

Bei der in den Fig. 12 und 13 dargestellten weiteren Ausführungsform der Knickwinkelregelungs- und Begrenzungsvorrichtung gemäß Fig. 6 ist die Drossel 71 und das regelbare Ventil 81 zu einer Durchflußregeleinrichtung 181 zusammengefaßt. Bei sonst gleichem Aufbau ergibt sich hierdurch die Möglichkeit, ein geeignetes Betriebsverhalten der Vorrichtung auch dann zu erreichen, wenn kein zusätzliches regelbares Ventil für langsame Fahrt oder für Rangierfahrten vorgesehen ist. Neben der Einsparung einer Drossel ergibt sich als zusätzlicher Vorteil, daß die Möglichkeit besteht, durch eine sich verändernde Öffnung des Ventilquerschnittes innerhalb der Durchflußregeleinrichtung 181 Pendelbewegungen des Fahrzeugteiles 2 geschwindigkeitsabhängig zu bremsen, d.h. zu dämpfen oder aufzuheben, indem die Öffnung des Ventilquerschnittes innerhalb der Durchflußregeleinrichtung 181 abhängig von den von der Tachometereinrichtung 10 vorgegebenen Geschwindigkeitswerten des Gelenkfahrzeuges gesteuert wird. In Fig. 12 ist der Ventilquerschnitt der Durchflußregeleinrichtung 181 entsprechend symbolisch geöffnet dargestellt, während der Ventilquerschnitt der Durchflußregeleinrichtung 181 in Fig. 13 geschlossen ist, so daß dann ein Durchfluß von Hydraulikflüssigkeit durch die Durchflußregeleinrichtung 181 nicht mehr möglich ist und das Gelenk 3 blockiert ist.

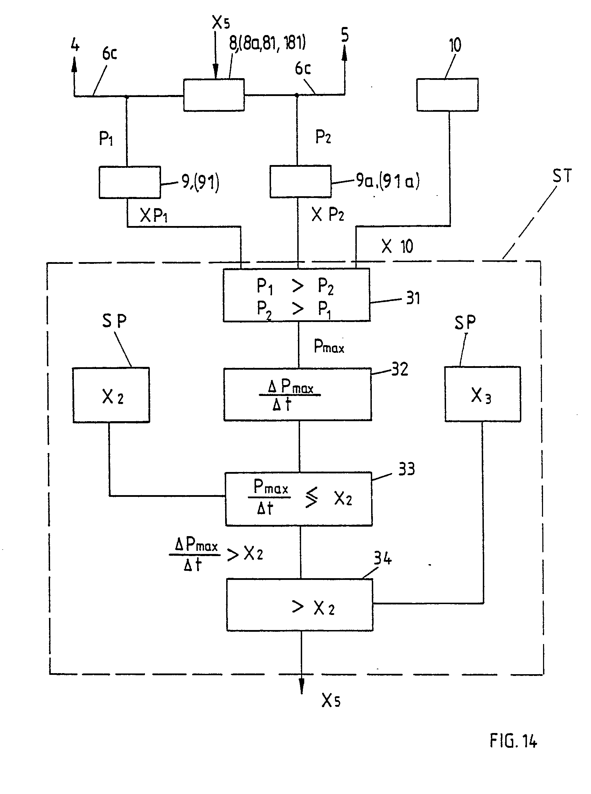

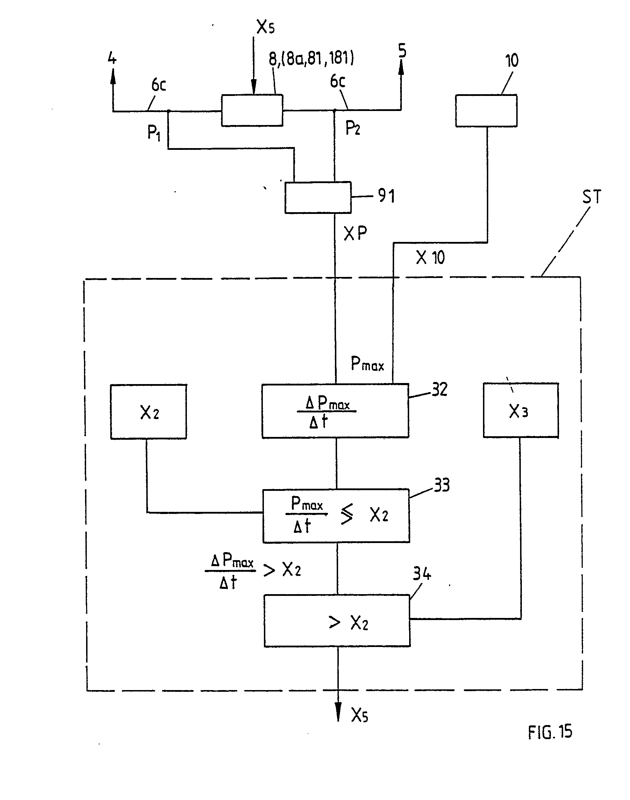

In den Fig. 14 und 15 sind rein schematisch beispielhaft Signalflußpläne für die Steuereinrichtung ST angegeben, wobei in Fig. 14 der Signalfluß in der Steuereinrichtung ST dargestellt ist, wie er zur Steuerung der Durchfluß-Begrenzungseinrichtung 150 notwendig ist, während in Fig. 15 der Signalfluß innerhalb der Steuereinrichtung ST dargestellt ist, wie er zur Steuerung der Durchfluß-Begrenzungseinrichtung 350 notwendig ist.

Die Drücke P1 bzw. P2 in der Verbindungsleitung 6c, 106c im Bereich des Ventils 8, 8b, 81, 181 werden von den Druckmeßeinrichtungen 9, 9a aufgenommen und zu den Eingangswerten XP1 und XP2 umgewandelt. Als Eingabewerte werden von der Steuereinrichtung St die Druckwerte XP1 und XP2 und ein Eingangssignal X10 von der Tachometereinrichtung 10 aufgenommen. Im Speicherwerk SP ist ein fahrzeugspezifischer, konstanter Wert X2 eingespeichert, der den maximal zulässigen Wert für $\triangle P$ max / $\triangle t$ darstellt. X2 ist also der Grenzwert für den Druckanstieg pro Zeiteinheit in der Verbindungsleitung 6c, bei dessen Überschreitung eine zu schnelle Drehbewegung im Drehgelenk 3 vorliegt und daher das Drehgelenk 3 blockiert werden soll. Darüber hinaus kann im Speicherwerk SP ein Grenzwert X3 als Absolutwert angegeben sein, der dem maximal zulässigen Gelenkwinkel entspricht. Der Gelenkwinkel wird dann über (in der Zeichnung nicht dargestellte) Meßsensoren im Drehgelenkbereich oder an den Hydraulikzylindereinheiten erfaßt und der erfaßte Meßwert dem Steuerwerk ST zugeleitet, so daß dann bei Erreichen des maximal zulässigen Gelenkknickwinkels das Drehgelenk 3 blockiert wird. Für die Einhaltung des maximal möglichen Drehgelenkwinkels können auch (in der Zeichnung nicht dargestellte) Endanschlagsschalter vorgesehen sein, so daß bei Erreichen des maximalen Knickwinkels im Drehgelenk von den Endanschlagsschaltern das Schaltsignal X3 abgegeben wird.

In der Steuereinrichtung ST wird dam durch den Vergleicher 31 der maximale Druck P max ermittelt und an den Rechner 32 weitergegeben. Der Rechner 32 setzt den Druckanstieg ins Verhältnis zur Zeit $\triangle t$ und gibt das Verhältnis $\triangle P$ max / $\triangle t$ an einen Vergleicher 33 weiter. Wenn dann das Verhältnis $\triangle P$ max / $\triangle t$ den Wert X2 überschreitet oder der Drehgelenkknickwinkel einen entsprechenden Wert erreicht und das Signal X3 vorliegt, gibt der Vergleicher 33 über den Schalter 34 ein Ausgangssignal X5 an das Ventil 8, 8b, 81, 181 ab, das dann schließt und auf diese Weise das Gelenk 3 blockiert. Bei einem entsprechenden Druckabfall in der Verbindungsleitung 6c, beispielsweise beim Geradeziehen des Fahrzeuges 1, 2 läuft der umgekehrte Vorgang ab und durch das Öffnen des Ventiles 8, 8a, 81, 181 wird das Gelenk 3 freigegeben.

Der Signalfluß gemäß Fig. 15 entspricht dem Signalfluß in Fig. 14, nur entfällt hier ein Vergleicher 31, da der Rechner 32 hier direkt mit einer Druckmeßeinrichtung 91 verbunden ist, die den Druck P1 bzw. P2 in der Verbindungsleitung 6c mißt und als Ausgangssignal das Signal XP abgibt.

Eine Umkehrung der Anordnung der die Knickwinkelregelungsund Begrenzungsvorrichtung ausmachenden Teile an den beiden Fahrzeugteilen 1, 2 eines Gelenkfahrzeuges ist möglich. So kann die Knickwinkelregelungs- und Begrenzungseinrichtung 100, 200, 300 auch an dem hinteren Fahrzeugteil 2 angeordnet sein, das dann die Durchfluß-Begrenzungseinrichtung 150, 250, 350 trägt, welche dann in gleicher Weise auf die mit dem Drehgelenk 3 verbundene Abstützeinrichtung 140, 240 einwirkt.

**Patentansprüche**

1. Vorrichtung (100; 200; 300) zur Verhinderung eines unbeabsichtigten Einknickens und zur Verbesserung der Seitenfahrstabilität bei kritischen Straßenund Fahrverhältnissen, die im Drehpunktbereich eines aus einem vorderen Fahrzeugteil (1) und einem mit diesem gelenkig verbundenen hinteren Fahrzeugteil (2), wobei eines der beiden Fahrzeugteile (1, 2) motorangetrieben ist, bestehenden Gelenkfahrzeuges angeordnet und für Sattelschleppfahrzeuge, Gelenkbusse oder Fahrzeuge mit nachlaufendem Fahrzeugteil geeignet ist, mit einer die beiden über ein Drehgelenk (3) zueinander verschwenkbar gekoppelten Fahrzeugteile (1, 2) verbindenden Abstützeinrichtung (140; 240), die aus hydraulischen Zylindereinheiten (4, 5), die mit jeweils zwei Flüssigkeitskammern (4a, 4b; 5a, 5b) über Verbindungsleitungen (6a, 6b) so in Verbindung stehen, daß bei einer horizontalen Drehbewegung der Fahrzeugteile (1, 2) zueinander die jeweils sich entsprechend der Bewegung der Tauchkolben (40, 50) volumenmäßig verkleinernden Kammern und die sich volumenmäßig vergrößernden Kammern verbunden sind, und aus einer eine die Verbindungsleitungen (6a, 6b) verbindenden Verbindungsleitung (6c) oder einer die Flüssigkeitskammern (104a, 104b) verbindenden Verbindungsleitung (106c) aufweisenden Durchflußbegrenzungseinrichtung besteht, wobei die Durchflußbegrenzungseinrichtung aus der Verbindungsleitung (6c, 106c), in deren Durchflußbereich mindestens eine Drossel (7, 71), mindestens ein regelbares Ventil (8, 81), ein Hydraulikspeicher (13) und eine Steuereinrichtung (ST) angeordnet sind, besteht, dadurch gekennzeichnet, daß

a) die Abstützeinrichtung (140; 240) aus mindestens einer an einem der beiden Fahrzeugteile (1, 2) endseitig (4c, 5c, 104c) angelenkten und mit ihrem gegenüberliegenden Ende jeweils rechts (4d, 104d) bzw. links (5d) von einer Gelenkmittelachse (3a) am jeweils anderen Fahrzeugteil (2, 1) in einem Abstand zur Gelenkmittelachse (3a) angelenkten, zwei durch einen an einer Kolbenstange (41, 51, 141) befestigten Tauchkolben (40, 50, 140) getrennte Flüssigkeitskammern (4a, 4b, 5a, 5b, 104a, 104b) aufweisende Hydraulikzylindereinheit (4, 5, 104) besteht,

b) im Durchflußbereich der Verbindungsleitung (6c, 106c) Mittel (9, 9a; 91, 91a) vorgesehen sind, die den Druck in der Verbindungsleitung (6c, 106c) messen und mindestens ein Drucksignal erzeugen,

c) die Drossel (7, 71) und das regelbare Ventil (8, 81) als Durchflußregeleinrichtung ausgebildet sind, und

d) die Steuereinrichtung (ST) als elektronisch gesteuertes Programmschaltwerk ausgebildet ist und folgende Komponenten aufweist:
- einen Sollwertspeicher (SP), in dem ein konstanter Wert eingespeichert ist, der einen Grenzwert für den Druckanstieg in der Verbindungsleitung (6c, 106c) darstellt,
- eine Recheneinheit (32), die aus dem Drucksignal den Druckanstieg im Verhältnis zur Zeit△t bestimmt,
- eine Vergleichereinrichtung (33), in der dieser Druckanstieg mit dem konstanten Wert verglichen wird, und
- einen Ventilbetätigungsschalter (34), durch den das regelbare Ventil (8, 81) in Tätigkeit gesetzt wird, wenn der Druckanstieg den konstanten Wert überschreitet.

2. Vorrichtung nach Anspruch 1, dadurch gekennzeichnet, daß im Durchflußbereich der Verbindungsleitung (6c, 106c) mindestens eine in Strömungsrichtung jeweils vor bzw. hinter dem regelbaren Ventil (8; 81, 81a) mit der Verbindungsleitung (6c, 106c) verbundene Druckmeßeinrichtungen (9, 9a; 91, 91a) angeordnet ist.

3. Vorrichtung nach Anspruch 1 oder 2, dadurch gekennzeichnet, daß die Verbindungsleitung (6c, 106c) mit zwei regelbaren Ventilen (8, 8b) versehen ist, wobei das Ventil (8b) den Hydraulikspeicher (13) von der Verbindungsleitung (6c; 106c) trennend angeordnet ist.

4. Vorrichtung nach einem der vorangegangenen Ansprüche 1 bis 3, dadurch gekennzeichnet, daß die Verbindungsleitung (6c, 106c) mit einem parallel zum regelbaren Ventil (8; 81) angeordneten regelbaren Ventil (8a; 81a) versehen ist.

5. Vorrichtung nach Anspruch 1, dadurch gekennzeichnet, daß die Durchfluß-Begrenzungseinrichtung (250) aus einer Verbindungsleitung (6c) besteht, die einen Abschnitt (61c) mit zwei in entgegengesetzten Strömungsrichtungen sperrenden Rückschlagventilen (12a, 12b), zwischen denen eine Zuführungsleitung (6e) einmündet, die über Zuführungsleitungen (62c, 63c), in deren Strömungsverlauf entsprechend sperrende Rückschlagventile (12c, 13d) angeordnet sind, mit der Verbindungsleitung (6c) vor und hinter deren Abschnitt (61c) verbunden ist, und bei der vor ihrer Einmündung in den Abschnitt (61c) in ihrem Strömungsverlauf der Druckmeßschalter (91), die Drossel (71), das regelbare Ventil (81) und der Hydraulikspeicher (113) angeordnet sind, aufweist, wobei die Zuführungsleitung (63c) über eine Verbindungsleitung (64c) mit dem Abschnitt (61c) der Verbindungsleitung (6c) im Einmündungsbereich der Zuführungsleitung (6e) verbunden ist, die in ihrem Strömungsverlauf ein entsprechend angeordnetes Rückschlagventil (112c) und ein regelbares Ventil (81a) aufweist.

6. Vorrichtung nach Anspruch 1, dadurch gekennzeichnet, daß die Durchfluß-Begrenzungseinrichtung (350) aus einer Verbindungsleitung (6c) besteht, die einen Abschnitt (61c) mit zwei in entgegengesetzten Strömungsrichtungen sperrenden Rückschlagventilen (12a, 12b) und zwei Druckmeßeinrichtungen (91, 91a), zwischen denen eine Zuführungsleitung (6e) einmündet, die über Zuführungsleitungen (62c, 63c), in deren Strömungsverlauf entsprechend sperrende Rückschlagventile (12c, 12d) angeordnet sind, mit der Verbindungsleitung (6c) vor und hinter deren Abschnitt (61c) verbunden ist, und bei der vor ihrer Einmündung in den Abschnitt (61c) in ihrem Strömungsverlauf die Drossel (71), das regelbare Ventil (81) und der Hydraulikspeicher (113) angeordnet sind, aufweist, wobei die Zuführungsleitung (63c) über eine Verbindungsleitung (64c) mit dem Abschnitt (61c) der Verbindungsleitung (6c) im Einmündungsbereich der Zuführungsleitung (6e) verbunden ist, die in ihrem Strömungsverlauf ein entsprechend angeordnetes Rückschlagventil (112c) und ein regelbares Ventil (81a) aufweist.

7. Vorrichtung nach einem der vorangegangenen Ansprüche 1 bis 6, dadurch gekennzeichnet, daß das Drehgelenk (3) aus einem am Fahrzeugteil (1) fest angeordneten Grundring (31), in dem ein Innenkranz (32a), der die Jochplatte (32b) trägt und mit dieser fest verbunden ist, frei drehbar gelagert ist, besteht, wobei die Jochplatte (32b) über entsprechende Träger (21, 22) mit dem Fahrzeugteil (2) lösbar verbunden ist.

8. Vorrichtung nach einem der vorangegangenen Ansprüche 1 bis 7, dadurch gekennzeichnet, daß die Steuereinrichtung (ST) mit einer Tachometereinrichtung (10) verbunden ist.

## Revendications

1. Dispositif (100; 200; 300) pour empêcher une inflexion inopinée et pour améliorer la stabilité latérale de marche en cas de conditions de route et de marche critiques qui est placé dans la zone du pivot d'un véhicule articulé composé d'une partie antérieure de véhicule (1) et d'une partie postérieure de véhicule (2) reliée de manière articulée à celle-ci, l'une des deux parties de véhicule (1, 2) étant commandée par moteur, et qui convient pour des véhicules semi-remorques, des autobus articulés ou des véhicules avec une partie de véhicule qui suit, avec un dispositif d'appui (140; 240) qui relie les deux parties de véhicule (1, 2), qui sont couplées de manière pivotante l'une par rapport à l'autre par une articulation tournante (3), qui se compose d'unités de cylindre (4, 5) hydrauliques, qui sont en relation chacune avec deux chambres de liquide (41, 4b; 5a, 5b) par des conduites de raccordement (6a, 6b) de telle manière que, lors d'une rotation horizontale des parties de véhicule (1, 2) l'une par rapport à l'autre, les chambres dont le volume diminue respectivement selon le déplacement des pistons plongeurs (40, 50) et les chambres dont le volume s'accroît étant reliées, et d'un dispositif de limitation de débit qui présente une conduite de raccordement (6c) qui relie les conduites de raccordement (6a, 6b) ou d'une conduite de raccordement (106c) qui relie les chambres de liquide (104a, 104b), le dispositif de limitation de débit se composant de la conduite de raccordement (6c, 106c), dans la zone de passage de laquelle il est placé au moins un étranglement (7, 71), au moins une soupape réglable (8, 81), un réservoir d'hydraulique (13) et un dispositif de commande (ST), caractérisé en ce que

a) le dispositif d'appui (140; 240) se compose d'au moins une unité de cylindre hydraulique (4, 5, 104) articulée par une extrémité (4c, 5c, 104c) à l'une des deux parties de véhicule (1, 2) et articulée par son extrémité opposée respectivement à droite (4d, 104d) ou à gauche (5d) d'un axe médian d'articulation (3a) sur l'autre partie de véhicule respective (2, 1) à une certaine distance de l'axe médian d'articulation (3a), présentant deux chambres de liquide (4a, 4b, 5a, 5b, l04a, 104b) séparées par un piston plongeur (40, 50, 140) fixé à une tige de piston (41, 51, 141),

b) des organes (9, 9a; 91, 91a) qui mesurent la pression dans la conduite de raccordement (6c, 106c) et qui produisent au moins un signal de pression, sont prévus dans la zone de passage de la conduite de raccordement (6c, 106c),

c) l'étranglement (7, 71) et la soupape réglable (8, 81) sont configurés comme dispositif de régulation de débit et

d) que le dispositif de commande (ST) est configuré comme programmateur commandé électroniquement et qu'il présente les éléments suivants:

- une mémoire de la valeur de consigne (SP) dans laquelle est mémorisée une valeur constante qui représente un seuil pour l'accroissement de la pression dans la conduite de raccordement (6c, 106c),

- une unité de calcul (32) qui, à partir du signal de pression, détermine l'accroissement de la pression par rapport au temps t,

- un comparateur (33) dans lequel cet accroissement de la pression est comparé à la valeur constante,

- et un commutateur de commande de la soupape (34) qui met en action la soupape réglable (8, 81) lorsque l'accroissement de la pression dépasse la valeur constante.

2. Dispositif selon la revendication 1, caractérisé en ce qu'au moins un dispositif de mesure de la pression (9, 9a; 91, 91a) relié à la conduite de raccordement (6c, 106c) est placé dans la zone de passage de la conduite de raccordement (6c, 106c) dans le sens de l'écoulement respectivement devant ou derrière la soupape réglable (8; 81, 81a).

3. Dispositif selon la revendication 1 ou 2, caractérisé en ce que la conduite de raccordement (6c, 106c) est équipée de deux soupapes réglables (8, 8b), la soupape (8b) étant placée en séparant le réservoir d'hydraulique (13) de la conduite de raccordement (6c, 106c).

4. Dispositif selon l'une des revendications précédentes 1 à 3, caractérisé en ce que la conduite de raccordement (6c, 106c) est équipée d'une soupape réglable (8a, 81a) placée parallèlement à la soupape réglable (8; 81).

5. Dispositif selon la revendication 1, caractérisé en ce que le dispositif de limitation de débit (250) se compose d'une conduite de raccordement (6c) qui présente un tronçon (61c) avec deux clapets antiretour (12a, 12b) qui bloquent dans des sens d'écoulement opposés, entre lesquels aboutit une conduite d'amenée (6e) qui est reliée à la conduite de raccordement (6c) devant et derrière son tronçon (61c) par des conduites d'amenée (62c, 63c) dans le trajet d'écoulement desquelles des clapets antiretour (12c, 13d) bloquant de manière correspondante sont placés et pour laquelle le commutateur de mesure de pression (91), l'étranglement (71), la soupape réglable (81) et le réservoir d'hydraulique (113) sont placés dans son trajet d'écoulement, avant qu'elle ne débouche dans le tronçon (61c), la conduite d'amenée (63c) étant reliée au tronçon (61c) de la conduite de raccordement (6c) dans la zone de l'embouchure de la conduite d'amenée (6e) par une conduite de raccordement (64c) qui présente dans son trajet d'écoulement un clapet antiretour (112c) placé de manière correspondante et une soupape réglable (81a).

6. Dispositif selon la revendication 1, caractérisé en ce que le dispositif de limitation de débit (350) se compose d'une conduite de raccordement (6c) qui présente un tronçon (61c) avec deux clapets antiretour (12a, 12b) bloquant dans des sens d'écoulement opposés et deux dispositifs de mesure de la pression (91, 91a) entre lesquels aboutit une conduite d'amenée (6e) qui est reliée à la conduite de raccordement (6c) devant et derrière son tronçon (61c) par des conduites d'amenée (62c, 63c) dans le trajet d'écoulement desquelles des clapets antiretour (12c, 12d) bloquant de manière correspondante sont placés et pour laquelle l'étranglement (71), la soupape réglable (81) et le réservoir d'hydraulique (113) sont placés dans son trajet d'écoulement, avant qu'elle ne débouche dans le tronçon (61c), la conduite d'amenée (63c) étant reliée au tronçon (61c) de la conduite de raccordement (6c) dans la zone de l'embouchure de la conduite d'amenée (6e) par une conduite de raccordement (64c) qui présente dans son trajet d'écoulement un clapet antiretour (112c) placé de manière correspondante et une soupape réglable (81a).

7. Dispositif selon l'une des revendications précédentes 1 à 6, caractérisé en ce que l'articulation tournante (3) se compose d'un anneau de base (31), placé de manière fixe sur la partie de véhicule (1), dans lequel une couronne intérieure (32a), qui porte la plaque de travée (32b) et qui lui est reliée, est positionnée de manière à être librement rotative, la plaque de travée (32b) étant reliée à la partie de véhicule (2) par des supports correspondants (21, 22).

8. Dispositif selon l'une des revendications précédentes, caractérisé en ce que le dispositif de commande (ST) est relié à un dispositif tachymétrique (10).

**Claims**

1. Device (100; 200; 300) for preventing accidental collapsing and for improvement of stability in case of dangerous road and conducting (driving) situations, arranged in the swivel area of an articulated vehicle consisting of a front vehicle portion (1) and a rear articulated vehicle portion (2), one of the two vehicle portions being (1, 2) engine driven, and appropriate for articulated lorries, articulated busses or vehicles with following vehicle portion, with a stabilizing device (140; 240) connecting the two vehicle portions (1, 2) pivoted together by means of a hinge (3), the stabilizing device consisting of hydraulic cylinder systems (4, 5), each of it being connected to two liquid chambers (4a, 4b; 5a, 5b) via connecting lines (6a, 6b) in such a way that, during horizontal movement of the two vehicle portions (1, 2) in relation to each other, there is a communication between the chambers reducing in volume and the chambers increasing in volume according to the movement of the trunk piston (40, 50) and of a flow regulator provided with a connection line (6c) connecting the connection lines (6a, 6b) or a connection line (106c) connecting the liquid chambers (104, 104b), the flow regulator consisting of the connection line (6c, 106c), in the flow area of which are provided at least a throttle (7, 71), at least one controllable valve (8, 81), a hydraulic accumulator (13) and a control means (ST) characterized in that

a) the stabilizing device (140; 240) consists of at least one hydraulic system (4, 5, 104) articulated to one end (4c, 5c, 194c) of the two vehicle portions (1, 2) and articulated to the other vehicle portion (2, 1) respectively with its opposite end to the right hand side (4d, 104d) or to the left hand side (5d) of an articulated centre axle (3a) and spaced from the articulated centre axle (3a) provided with two liquid chambers (4a, 4b, 5a, 5b, 104a, 104b) spaced apart by a trunk piston (40, 50, 140) attached to a piston rod (41, 51, 141),

b) means (9, 9a; 91, 91a) are provided in the flow area of the connection line (6c, 106c) which measure the pressure in the connection line (6c, 106c) and generate at least one pressure signal,

c) the throttle (7, 71) and the controllable valve (8, 81) are a flow regulating device, and

d) the control device (ST) is an electronically controllable programming circuit with the following components:

- a set value store (SP) with a stored constant value representing a limit value for the increase of pressure in the connection line (6c, 106c),

- a calculating unit (32) determinating the pressure increase from the pressure signal in relation to the time $\triangle t$,

- a comparing system (33) in which this pressure increase is compared with the constant value, and

- a valve actuating switch (34) which activates the controllable valve (8, 81) as soon as the pressure increase exceeds the constant value.

2. Device according to claim 1, characterized in that at least one pressure measuring device (9, 9a; 91, 91a) is provided in the flow area of the connection line (6c, 106c) each in front of and behind the controllable valve (8; 81, 81a) in the sense of flow and connected with the connection line (6c, 106c).

3. Device according to claims 1 or 2, characterized in that the connection line (6c, 106c) is provided with two controllable valves (8, 8b), the valve (8b) being arranged in such a way as to separate the hydraulic accumulator (13) from the connection line (6c; 106c).

4. Device according to either of the preceeding claims 1 to 3, characterized in that the connection line (6c, 106c) is provided with a controllable valve (8a, 81a) which is arranged parallel to the controllable valve (8; 81).

5. Device according to claim 1, characterized in that the flow reducing device (250) consists of a connection line (6c), which is provided with a portion (61c) with two reflux valves (12a, 12b) retaining in opposite senses of flow with a feeding line (6e) joining between them, which is connected with the connection line (6c) in front of and behind its portion (61c) via feeding lines (62c, 63c) in which course of flow reflux valves (12c, 13d) are provided retaining accordingly, and in which the pressure measuring switch (91), the throttle (71), the controllable valve (81) and the hydraulic accumulator (113) are arranged in the course of flow in front of its joining the portion (61c), the feeding line (63c) being connected via a connection line (64c) with the portion (61c) of the connection line (6c) in the joining area of the feeding line (6e), which has a reflux valve (112c) arranged accordingly in its course of flow and a controllable valve (81a).

6. Device according to claim 1, characterized in that the flow reducing device (250) consists of a connection line (6c), which is provided with a portion (61c) with two reflux valves (12a, 12b) retaining in opposite senses of flow and two pressure measuring devices (91, 91a) with a feeding line (6e) joining between them, which is connected with the connection line (6c) in front of and behind, its portion (61c) via feeding lines (62c, 63c) in which course of flow reflux valves (12c, 13d) are provided retaining accordingly, and in which the throttle (71), the controllable valve (81) and the hydraulic accumulator (113) are arranged in the course of flow in front of its joining the portion (61c), the feeding line (63c) being connected via a connection line (64c) with the portion (61c) of the connection line (6c) in the joining area of the feeding line (6e), which has a reflux valve (112c) arranged accordingly in its course of flow and a controllable valve (81a).

7. Device according to either of the preceeding claims 1 to 6, characterized in that the hinge (3) consists of a base ring (31) firmly fixed to the vehicle portion (1), this base ring including a pivoted inner ring (32a) which bears the capping piece (32b) and is firmly connected with it, the capping piece (32b) being removably connected via appropriate supports (21, 22) with the vehicle portion (2).

8. Device according to either of the preceeding claims 1 to 7, characterized in that the control device (ST) is connected with a speed indicator (10).

FIG. 1

0 122 956

FIG. 2

FIG. 3

FIG. 4

0 122 956

FIG. 5

FIG.6

FIG. 7

7

FIG.8

FIG. 9

FIG.10

FIG.11

FIG.12

FIG.13

FIG. 14

0 122 956

13

FIG. 15